Europäisches Patentamt

European Patent Office

Office européen des brevets

(19)

(11) Publication number: **0 423 675 A2**

# EUROPEAN PATENT APPLICATION

(12)

(21) Application number: 90119731.9

(22) Date of filing: 15.10.90

(51) Int. Cl.5: **B23Q 5/04**, F16C 32/06

(30) Priority: 16.10.89 JP 119752/89 U

(43) Date of publication of application:
24.04.91 Bulletin 91/17

(84) Designated Contracting States:
DE FR GB IT

(71) Applicant: KITAMURA MACHINERY CO.,LTD.
1870 Toide-Komyoji
Takaoka-shi Toyama-ken(JP)

(72) Inventor: Kitamura, Koichiro
3-11-5 Ekinan
Takaoka-shi, Toyama-ken(JP)

(74) Representative: Patentanwälte RUFF, BEIER
und SCHÖNDORF
Neckarstrasse 50
W-7000 Stuttgart 1(DE)

(54) A spindle for machine tools.

(57) A spindle head for machine tools includes a housing (16), a spindle (12) having a through-hole (12b) formed therein and a tapered portion (12c) at one end thereof for receiving a tool holder (8), a bearing means (14, 44) for supporting rotatably the spindle (12) in the housing (16), a draw-bar (30) placed in the through-hole (12b) of the spindle (12), a collet (36) connected to the draw-bar at its one end for holding the tool holder (8), and means (20, 28) for moving the spindle (12), the bearing means (14, 44) having a concave portion (14c). The spindle (12) has a convex portion (12a, 42a) corresponding in shape to the concave portion (14c). The concave portion (14c) of the bearing means (14, 44) cooperates with the convex portion (12a, 42a) of the spindle (12) so that the bearing means (14, 44) can support the spindle (12) in both radial and thrust directions.

EP 0 423 675 A2

## A SPINDLE HEAD FOR MACHINE TOOLS

### BACKGROUND OF THE INVENTION

This invention relates to a spindle head for machine tools.

A spindle for machine tools is usually supported by rolling bearings such as ball bearings or roller bearings. A spindle is sometimes supported by sliding bearings and rolling bearings in combination.

High accuracy and good surface finish are required when parts are manufactured. In such a case, a spindle must be supported with high precision and rotate at a high speed.

As rolling bearings have a critical rotation speed against seizure, the spindle supported by the rolling bearings cannot rotate for a long time at any speed higher than the critical rotation speed.

Also, a spindle supported by a rolling bearing means is apt to vibrate if at least one ball or roller in the bearing means has some defective roundness. When such vibration is generated and transferred to a tool and a tool holder supported in the spindle, parts cannot be accurately machined.

### SUMMARY OF THE INVENTION

The object of this invention is to provide a spindle head for machine tools in which a spindle is supported with sufficient precision and rigidity so that the spindle can rotate for a long time at a high speed without harmful vibration.

In accordance with this invention, a spindle head for machine tools includes a housing, a spindle having a through-hole formed therein and a tapered portion at one end thereof for receiving a tool holder, a bearing means for supporting rotatably the spindle in the housing, a draw-bar placed in the through-hole, a collet connected to the draw-bar at its one end for holding a tool holder, means for moving the spindle, the bearing means having a concave portion, the spindle having a convex portion corresponding in shape to the concave portion, the concave portion of the bearing means cooperating with the convex portion of the spindle so that the bearing means can support the spindle in both radial and thrust directions.

The concave and convex portions are preferably spherical, but they can be formed to consist of two conical portions and a cylinder portion therebetween.

### BRIEF DESCRIPTION OF THE DRAWINGS

Fig.1 is a longitudinal sectional view showing a spindle head for machine tools according to a preferred embodiment of this invention;

Fig.2 is a closs-sectional view taken along the line II-II in Fig. 1; and

Fig. 3 is a longitudinal sectional view showing a part of a spindle head according to a further embodiment of this invention.

### DESCRIPTION OF THE PREFERRED EMBODIMENTS

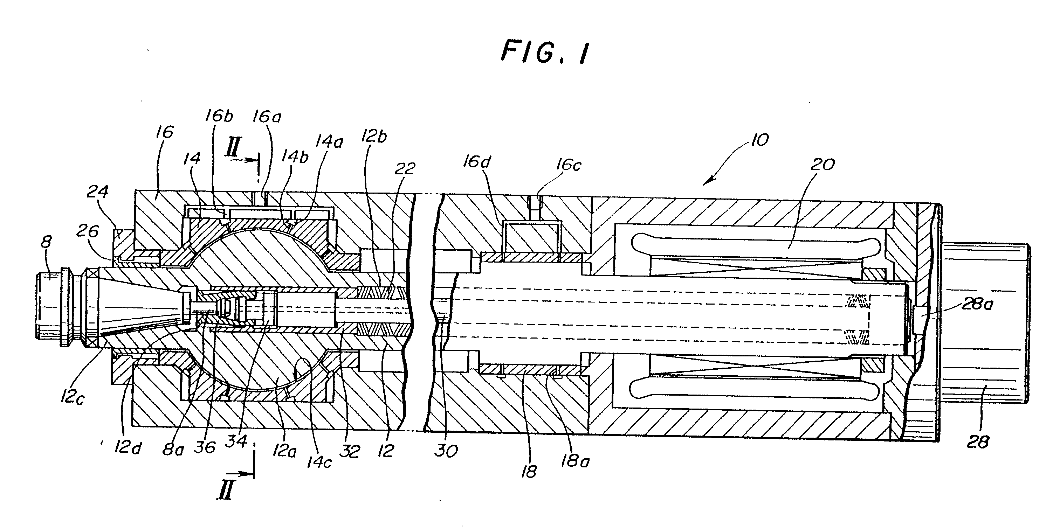

In Fig. 1, a spindle head 10 has a spindle 12, a bearing 14, a housing 16, and a draw-bar 30. The spindle 12 is rotatably supported by the bearing 14 within the housing 16. The spindle 12 has a through-hole 12b formed therein in its axis direction. A tapered portion 12cis formed at one end of the spindle 12 for detachably supporting a tool holder 8 holding a tool (not shown). An enlarged space 12d is formed at the bottom of the tapered portion 12 within the spindle 12.

The spindle 12 has a spherical convex portion 12a at its intermediate portion. The convex portion 12a is integrally formed with the spindle body and protrudes outwardly.

The bearing means 14 is placed between the convex portion 12a of the spindle 12 and the housing 16 for supporting rotatably the spindle body 12 with respect to the housing 16. The bearing means 14 has a concave portion 14c corresponding in shape to the spherical convex portion 12a of the spindle 12 and surrounds the convex portion 12a of the spindle 12 as best shown in Fig. 1.

A plurality of oil inlets 14a and oil passages 14b are formed in the bearing means 14 so that the lubricating oil can be introduced into the inside of the bearing means 14 therethrough. The oil inlets 14a are connected to respective oil passages 16b of the housing 16 which are connected to common oil inlets 16a of the housing 16 so that the lubricating oil can be supplied into a contacting area between the spherical convex portion 12a and the bearing means 14 via the oil passages 16b, 14b. They constitute a hydrostatic bearing system.

Instead of the oil, a gas such as an inert gas or $N_2$ can be used. The gas or oil can be circulated for the cooling purpose.

The draw-bar 30 is slidably placed in the through-hole 12b of the spindle 12 along its longitudinal direction. A joint member 34 is attached to one end of the draw-bar 30. A conventional collet 36 is joined to the draw-bar 30 by means of the joint member 34.

When the collet 36 and the draw-bar 30 are moved forwardly with a given stroke and then the end of the collet 36 is positioned in the enlarged space 12d, the collet 36 is opened so that a pull stud bolt 8a of the tool holder 8 is uncramped. On the other hand, when the collet 36 is moved reversely and then the end of the collet 36 is positioned in the through-hole 12b, the collet 36 is closed so that the pull stud bolt 8a is cramped.

In Fig.1, the pull stud bolt 8a is pressed by the collet 36 and the tool holder 8 is cramped against the tapered setting portion 12c.

In the through-hole 12b, a plurality of disc springs 22 are placed for pressing rearwardly the draw-bar 30 between a sleeve-like member 32 and an enlarged end portion of the draw-bar 30.

A hydrostatic radial pressure bearing 18 is provided at a middle portion of the spindle 12. Oil passages are formed in the hydrostatic radial bearing 18 so that a lubricating oil is supplied thereinto from an oil inlet 16c via oil passages 16d formed in the housing 16.

A cylinder means 28 is attached at a rear end of the spindle head 10 for moving or actuating the draw-bar 30. When a rod 28a of the cylinder means 28 expands and the draw-bar 30 moves forwardly against the force of the disc springs 22, the front end of the collet 36 is moved into the enlarged space 12d so that the collet 36 is opened so as to release the pull stud bolt 8a of the tool holder 8. When the used tool holder 8 is detouched from the spindle and a new tool holder is inserted into the spindle 12, the rod 28a is contracted and the draw-bar is moved rearwardly by means of the dish springs 22 for cramping the new tool holder.

A motor 20 is mounted between the cylinder means 28 and the radial bearing 18 for rotating the spindle body 12.

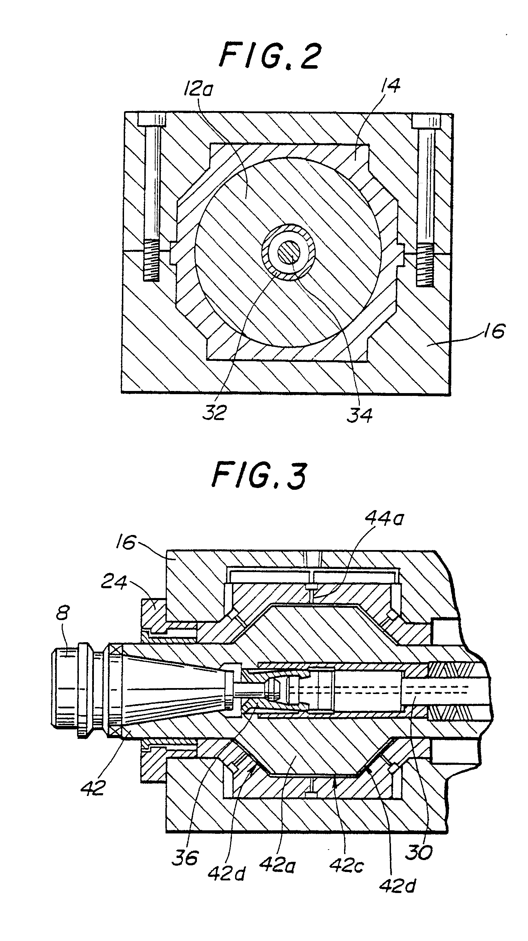

Fig.3 shows a further embodiment of this invention. A spindle 42 is supported by a bearing 44 within the housing 16. The spindle 42 has a convex portion 42a which consists of a cylindrical portion 42c and two conical portions 42d. The bearing 44 consists of two conical surfaces and a cylindrical surface therebetween which correspond in shape to the convex portion 42a of the spindle 42, instead of the spherical bearing 14 in Fig. 1.

Oil passages 44a are formed in the bearing means 44 for supplying an oil into an area between the convex portion 42a of the spindle 42 and the bearing 44. The oil or gas is introduced into between the convex portion 42a of the spindle body 42 and the bearing 44. They form a hydrostatic bearing system.

This invention is not limited to the above-stated embodiments. For example, a spindle can be supported by two spherical bearings. The spherical portion 12a can be divided into two or more portions. The convex portion and the bearing can be formed in any shape including any combination of spherical, conical, cylindrical shapes. The convex portion can be separately formed and fixed to the spindle.

## Claims

1. A spindle head for machine tools, comprising a housing (16), a spindle (12) having a through-hole (12b) formed therein and a tapered portion (12c) at one end thereof for receiving a tool holder (8), a bearing means (14, 44) for supporting rotatably the spindle (12) in the housing (16), a draw-bar (30) placed in the through-hole (12b) of the spindle (12), a colet (36) connected to the draw-bar at its one end for holding the tool holder (8), means (20, 28) for moving the spindle (12), the bearing means (14, 44) having a concave portion (14c), the spindle (12) having a convex portion (12a, 42a) corresponding in shape to the concave portion (14c), the concave portion (14c) of the bearing means (14, 44) cooperating with the convex portion (12a, 42a) of the spindle (12) so that the bearing means (14, 44) can support the spindle (12) in both radial and thrust directions.

2. A spindle head as defined in claim 1, wherein the concave and convex portions (12a, 42a, 14c) are spherical.

3. A spindle head as defined in claim 1 or 2, wherein each of the concave and convex portions (12a, 42a, 14c) includes two conical portions (42d) and a cylinder portion (42c) therebetween in such a way that they cooperate with each other.

4. A spindle head as defined in one of the claims 1 to 3, wherein the convex portion (12a, 42a) is integraly formed as a part of the spindle (12).

5. A spindle head as defined in one of the claims 1 to 4, wherein a second hydrostatic radial bearing (18) is placed in the housing (16) for rotatably supporting the spindle (12).

# FIG. 1

EP 0 423 675 A2

# FIG. 2

# FIG. 3